# EUROPÄISCHE PATENTSCHRIFT

(11) **EP 4 110 710 B1**
(45) Veröffentlichungstag und Bekanntmachung des Hinweises auf die Patenterteilung: **05.03.2025**
(21) Anmeldenummer: 21706155.5
(22) Anmeldetag: 20.01.2021
(51) Int. Cl.: B65G 1/137

(54) **ZENTRALBANDSYSTEM UND VERFAHREN ZUR KOMMISSIONIERUNG VON ARTIKELN**
CENTRAL BELT SYSTEM AND METHOD FOR PICKING ARTICLES
SYSTÈME DE COURROIE CENTRALE ET PROCÉDÉ POUR LA PRÉPARATION D'ARTICLES COMMANDÉS

(30) Priorität: 27.02.2020 AT 501452020
(43) Veröffentlichungstag der Anmeldung: 04.01.2023
(73) Patentinhaber: Knapp AG, 8075 Hart bei Graz (AT)
(72) Erfinder: ULLER, Klaus, 8075 Hart bei Graz (AT); MATHI, Franz, 8075 Hart bei Graz (AT)
(74) Vertreter: Schwarz & Partner Patentanwälte GmbH
(86) Internationale Anmeldenummer: PCT/AT2021/060019
(87) Internationale Veröffentlichungsnummer: WO 2021/168489

(56) Entgegenhaltungen:
- EP-A1- 0 183 074
- US-A- 5 755 552

## Beschreibung

Die Erfindung betrifft ein Zentralbandsystem zur Kommissionierung von Artikeln in mit einem Behälterförderer transportierte Auftragsgebinde, mit zumindest einem Zentralband, welches eine Förderrichtung in Richtung des Behälterförderers aufweist, wobei das Zentralband in Querrichtung zur Förderrichtung zumindest einen ersten und zweiten Bandbereich aufweist, und mit jeweils dem ersten und zweiten Bandbereich zugeordneten ersten und zweiten Artikelschächten zum Auswurf von Artikeln in den jeweils ersten und zweiten Bandbereich.

### Stand der Technik

Aus dem Stand der Technik (DE 10 2012 006 150 A1) sind Zentralbandsysteme bekannt, in welchen Artikel aus beiderseits zu einem Zentralband angeordneten Artikelschächten gemäß einem Auftrag auf die jeweilige Seite des Zentralbands ausgeworfen werden und gemeinsam in ein Auftragsgebinde eines Behälterförderers kommissioniert werden.

Dies trifft auch auf das Dokument EP0183074 A1 zu, welches den Oberbegriff der Ansprüche 1 sowie 8 zeigt. Solche

Zentralbandsysteme eignen sich allerdings nur bedingt für Anwendungen in denen viele Kleinaufträge aus einem großen Produktspektrum kommissioniert werden müssen, da die Auswurfzeiten aus den Artikelschächten den Durchsatz stark limitieren. Dies insbesondere dann, wenn oft hintereinander die gleichen Artikel ausgeworfen werden müssen.

Im Besonderen, wenn eine hohe Zahl an Kleinaufträgen aus einem großen Produktspektrum kommissioniert werden sollen, wie dies beispielsweise im Bereich des elektronischen Handels von Pharmazeutika der Fall ist, stoßen derartige seriell arbeitende Systeme schnell an ihre Leistungsgrenze.

### Offenbarung der Erfindung

Die vorliegende Erfindung hat sich daher die Aufgabe gestellt, ein Zentralbandsystem der eingangs erwähnten Art bereitzustellen, welches konstruktiv einfach einen hohen Durchsatz bei der Kommissionierung erreichen kann.

Die Erfindung löst die gestellte Aufgabe dadurch, dass das Zentralbandsystem eine Steuerung aufweist, um während eines ersten Zeitfensters Artikel gemäß einem ersten Auftrag aus den ersten Artikelschächten auszuwerfen und während eines zweiten Zeitfensters Artikel gemäß einem zweiten Auftrag aus den zweiten Artikelschächten auszuwerfen, wobei die ersten und zweiten Artikelschächte ein identisches Artikelspektrum aufweisen und das erste und zweite Zeitfenster miteinander synchronisiert sind, und dass am Behälterförderer zumindest ein erstes und zweites Auftragsgebinde vorgesehen sind, um die Artikel aus dem ersten und zweiten Bandbereich am Zentralband in das jeweils erste und zweite Auftragsgebinde am Behälterförderer zu kommissionieren.

Erfindungsgemäß weist das Zentralbandsystem eine Steuerung auf, um während eines ersten Zeitfensters Artikel gemäß einem ersten Auftrag aus den ersten Artikelschächten auszuwerfen und während eines zweiten Zeitfensters Artikel gemäß einem zweiten Auftrag aus den zweiten Artikelschächten auszuwerfen, so dass eine parallele Bearbeitung von zumindest zwei Aufträgen an einem einzelnen Zentralband ermöglicht wird. Die Artikel aus den ersten Artikelschächten werden in einen ersten Bandbereich und die Artikel aus den zweiten Artikelschächten in einen zweiten Bandbereich am Zentralband ausgeworfen. Die Bearbeitung des ersten und zweiten Auftrags wird also jeweils in einem eigenen Zeitfenster ohne Vermischung bzw. gegenseitige Beeinflussung der Artikel in den ersten und zweiten Bandbereichen erfolgen. Ein zuverlässiges Zentralbandsystem wird so geschaffen, welches eine parallele Kommissionierung der Aufträge ermöglicht.

Ein Zentralbandsystem mit höherem Durchsatz von Aufträgen wird somit geschaffen, da die ersten und zweiten Artikelschächte ein identisches Artikelspektrum aufweisen, also dieselben Produkte gleichzeitig in den ersten und den zweiten Bandbereich am Zentralband ausgeworfen werden. Eine parallele Verarbeitung von Aufträgen aus demselben Artikelspektrum an einem einzigen Zentralband wird so ermöglicht. Neben einem höheren Durchsatz kann das Zentralbandsystems auch konstruktiv einfach und kostengünstig realisiert werden, da nicht mehrere voneinander unabhängige und kostenintensive Zentralbänder in dem System vorgesehen werden müssen.

Am Behälterförderer sind weiters zumindest ein erstes und zweites Auftragsgebinde vorgesehen, so dass die Artikel aus dem ersten und zweiten Bandbereich voneinander unabhängig in das jeweils erste und zweite Auftragsgebinde am Behälterförderer kommissioniert werden.

Das erste und zweite Zeitfenster zum Auswurf von Artikeln aus den ersten und zweiten Artikelschächten in den ersten und zweiten Bandbereich sind miteinander synchronisiert, so dass der Durchsatz des Zentralbandsystems weiter erhöht wird. Die Steuerung synchronisiert dabei das erste und zweite Zeitfenster derart, dass eine gleichzeitige Kommissionierung der Artikel aus dem ersten und zweiten Bandbereich in das jeweils erste und zweite Auftragsgebinde am Behälterförderer ermöglicht wird. Das erfindungsgemäße Zentralbandsystem kann somit während der synchronisierten ersten und zweiten Zeitfenster jeweils Artikel gemäß einem ersten und zweiten Auftrag auf eine erste und zweite Bandseite des Zentralbands auswerfen und diese in ein erstes und zweites Auftragsgebinde am Behälterförderer kommissionieren.

Die Vorteile des erfindungsgemäßen Zentralbandsystems können besonders bei der Verarbeitung von Kleinaufträgen zu tragen kommen. Beispielsweise, wenn zwei Aufträge bestehend aus denselben Artikeln bearbeitet werden sollen, kann das erfindungsgemäße Zentralbandsystem einen deutlichen Zeitgewinn gegenüber einer seriellen Verarbeitung der Aufträge erfahren. Insbesondere bei Aufträgen mit wenigen Artikeln oder mehreren gleichen Artikeln überwiegen die Auswurfzeiten der Artikel aus den Artikelschächten, wodurch es zu Stillstandszeiten bzw. Verzögerungen am Zentralband kommt. Die Steuerung des erfindungsgemäßen Zentralbandsystem kann dagegen dafür sorgen, dass Aufträge zwischen den ersten und zweiten Artikelschächten derart verteilt werden, dass Stillstände bzw. Verzögerungen am Zentralband vermieden werden.

Weist weiters das Zentralband eine Trenneinrichtung zur Abtrennung des ersten und zweiten Bandbereichs auf, so kann das Zentralbandsystem zuverlässig sicherstellen, dass es zu keiner Vermischung zwischen den Artikeln im ersten und zweiten Bandbereich kommt. Zu einer solchen Vermischung kann es insbesondere kommen, wenn Artikel aus den Artikelschächten mit einem bestimmten Impuls in einen Bandbereich ausgeworfen werden, welcher dazu führt, dass sich die Artikel zumindest teilweise in den anderen Bandbereich bewegen. Dem kann mit der erfindungsgemäßen Trenneinrichtung zuverlässig entgegengewirkt werden.

Die zuvor genannten Vorteile können besonders dann verwirklicht werden, wenn die Trenneinrichtung als Trennvorhang oder als Trennsteg am Zentralband ausgebildet ist. So kann der Trennsteg beispielsweise ein mit dem Zentralband verbundener und mitbewegender Steg sein, während der Trennvorhang ein vom Zentralband getrennter Vorhang sein kann, welcher die Bandbereiche zuverlässig abtrennt.

Ist weiters ein Tray vorgesehen, um das erste und zweite Auftragsgebinde gemeinsam auf dem Behälterförderer zu transportieren, so können die Artikel der ersten und zweiten Aufträge, welche jeweils in das erste und zweite Auftragsgebinde kommissioniert werden, gemeinsam in einem Tray am Behälterförderer transportiert werden. Ein konstruktiv einfaches Zentralbandsystem kann so geschaffen werden.

Der Durchsatz des Zentralbandsystems kann weiter erhöht werden, wenn die Steuerung zum Synchronisieren des ersten und zweiten mit einer Stopp-Position des Trays am Behälterförderer ausgebildet ist. Durch eine Synchronisierung des ersten und zweiten Zeitfensters, in welchen jeweils Artikel aus den ersten und zweiten Artikelschächten in den ersten und zweiten Bandbereich ausgeworfen werden, kann eine gleichzeitige Kommissionierung der Artikel aus dem ersten und zweiten Bandbereich in das jeweils erste und zweite Auftragsgebinde am Behälterförderer ermöglicht werden. Sind das erste und zweite Zeitfenster nun zudem mit einer Stopp-Position des Trays, welcher die beiden Auftragsgebinde am Behälterförderer aufweist, synchronisiert, so kann die Kommissionierung des ersten und zweiten Auftrags parallel während einer einzigen Stopp-Position des Trays erfolgen. Es besteht somit keine Notwendigkeit mehrerer Stopp-Positionen des Trays zur Erfüllung der Aufträge, wodurch wiederum Verzögerungen bzw. Stillstandszeiten zuverlässig vermieden werden können.

Des Weiteren kann das erfindungsgemäße Zentralbandsystem jeweils dem ersten und zweiten Bandbereich zugeordnete dritte und vierte Artikelschächte zum Auswurf von Artikeln in den jeweils ersten und zweiten Bandbereich aufweisen.

Dies kann insbesondere dann von Vorteil sein, wenn die ersten und zweiten Artikelschächte Artikel einer Kategorie A (z.B. Schnelldreher) und die dritten und vierten Artikelschächte Artikel einer Kategorie B (z.B. Mittel- oder Langsamdreher, die seltener geordert werden) enthalten.

So ist etwa vorstellbar, dass die ersten und zweiten Artikelschächte ein identisches Artikelspektrum aus Artikeln der Kategorie A aufweisen, während die dritten und vierten Artikelschächte ein unterschiedliches Artikelspektrum aus Artikeln der Kategorie B aufweisen. So können etwa weniger häufig zu kommissionierende Artikel der Kategorie B in zusätzlichen dritten und vierten Artikelschächten vorrätig gehalten werden und die Aufträge durch die Steuerung zur Bearbeitung an den ersten oder zweiten Bandbereich zugewiesen werden, wodurch ein besonders flexibles und effizientes Zentralbandsystems bereitgestellt werden kann.

Die Erfindung hat sich weiters die Aufgabe gestellt, ein effizienteres Verfahren zur Kommissionierung von Artikeln über ein Zentralband gemäß dem Oberbegriff des Anspruchs 8 bereitzustellen.

Die Erfindung löst die gestellte Aufgabe durch die Merkmale des Anspruchs 8.

Durch das erfindungsgemäße Verfahren können somit während der ersten und zweiten Zeitfenster jeweils Artikel gemäß einem ersten und zweiten Auftrag auf eine erste und zweite Bandseite des Zentralbands ausgeworfen und diese in ein erstes und zweites Auftragsgebinde am Behälterförderer kommissioniert werden. Dabei findet insbesondere keine Vermischung zwischen den Artikeln im ersten und zweiten Bandbereich statt, und eine vollständig unabhängige parallele Erfüllung der Aufträge wird ermöglicht. Ein effizientes und einfaches Kommissionierungsverfahren kann somit geschaffen werden.

Die unterschiedlichen Auftragsgebinde werden dabei bevorzugt gemeinsam in einem Tray am Behälterförderer transportiert.

Die ersten und zweiten Zeitfenster, in welchen die Artikel aus den ersten und zweiten Artikelschächten in den jeweils ersten und zweiten Bandbereich ausgeworfen werden sind miteinander synchronisiert, so dass das Verfahren eine effiziente und im Wesentlichen gleichzeitige Bearbeitung des ersten und zweiten Auftrags ermöglicht.

Dies insbesondere dann, wenn das erste und zweite Zeitfenster zum Auswurf der Artikel aus den ersten und zweiten Artikelschächten mit einer Stopp-Position des Behälterförderers synchronisiert werden. Dabei hat sich unter anderem gezeigt, dass die Verfahrensökonomie verbessert wird indem es zu weniger Wartezeiten am Zentralband zwischen den Aufträgen kommt, da die Artikel gemäß dem ersten und zweiten Auftrag parallel aus den jeweiligen Artikelschächten auf das Zentralband ausgeworfen und vom Zentralband in die ersten und zweiten Auftragsgebinde am Behälterförderer kommissioniert werden können.

### Kurzbeschreibung der Zeichnungen

Im Folgenden werden bevorzugte Ausführungsvarianten der vorliegenden Erfindung anhand der Zeichnungen näher dargestellt. Es zeigen:
- Fig. 1:: eine schematische Draufsicht auf das Zentralbandsystem gemäß einer ersten bevorzugten Ausführungsvariante, und
- Fig. 2:: eine schematische Querschnittsansicht des Zentralbandsystems aus Fig. 1.

### Wege zur Ausführung der Erfindung

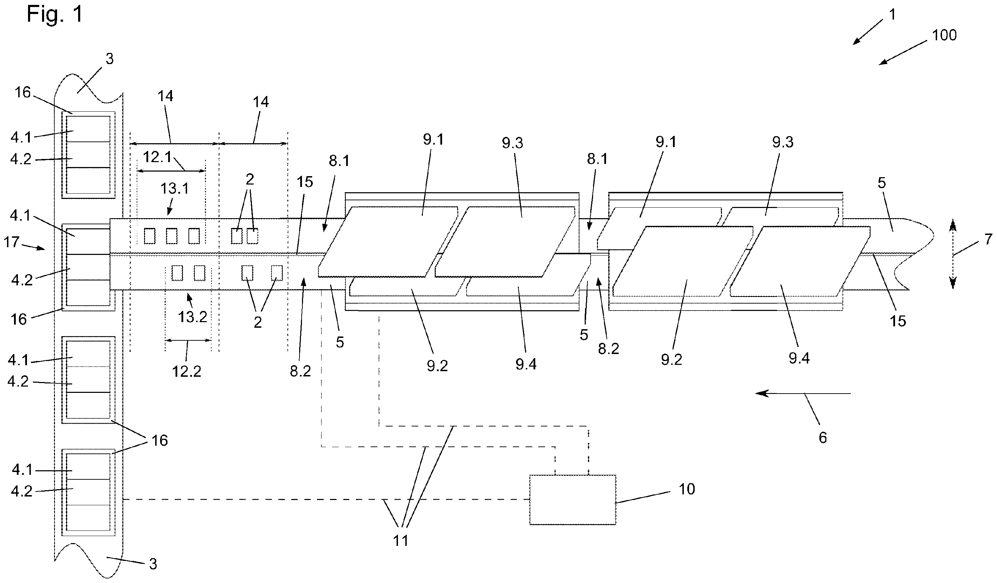

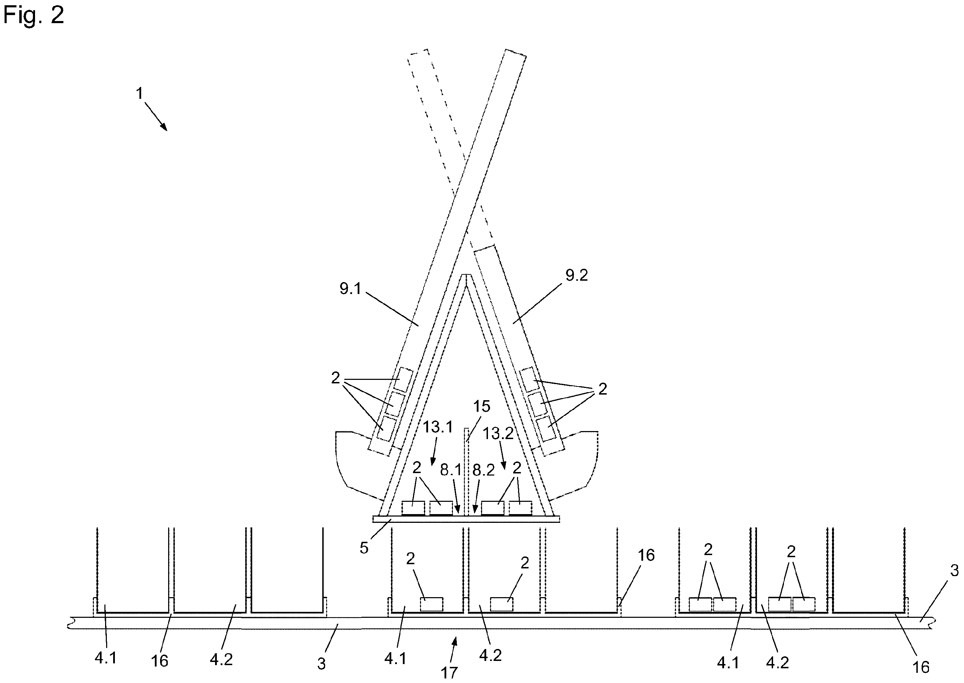

Fig. 1 zeigt eine Draufsicht auf ein erfindungsgemäßes Zentralbandsystem 1 zur Kommissionierung von Artikeln 2 in mit einem Behälterförderer 3 transportierten Auftragsgebinden 4.1, 4.2. Eine schematische Querschnittsansicht des Zentralbandsystems 1 ist zudem in Fig. 2 dargestellt.

Das Zentralbandsystem 1 weist ein Zentralband 5 auf, auf dem Artikel 2 in Förderrichtung 6 zum Behälterförderer 3 transportiert werden. In Querrichtung 7 zur Förderrichtung weist das Zentralband 5 zumindest einen ersten Bandbereich 8.1 und einen zweiten Bandbereich 8.2 auf, wobei dem ersten Bandbereich 8.1 zumindest erste Artikelschächte 9.1 und dem zweiten Bandbereich 8.2 zumindest zweite Artikelschächte 9.2 zugeordnet sind. In den Artikelschächten 9.1, 9.2 sind Artikel 2 gelagert, und können bei Bedarf in jeweils zugeordneten Bandbereich 8.1, 8.2 am Zentralband 5 ausgeworfen werden. Zwischen den Bandbereichen 8.1, 8.2 ist am Zentralband 5 eine Trenneinrichtung 15 zur Abtrennung der Bandbereiche 8.1, 8.2 vorgesehen. Die Trenneinrichtung 15 ist dabei als Trennvorhang 15 vorgesehen. In einer weiteren Ausführungsvariante kann die Trenneinrichtung 15 ebenso als Trennsteg ausgeführt sein.

In einer weiteren Ausführungsvariante kann das Zentralband 5 noch einen dritten oder weiteren Bandbereich aufweisen, was in den Figuren jedoch nicht näher dargestellt wurde.

Das Zentralbandsystem 1 weist zudem eine Steuerung 10 auf, welche die Artikelschächte 9.1, 9.2, das Zentralband 5 und den Behälterförderer 3 über Steuersignale 11 steuert. Die Steuerung 10 sorgt dabei dafür, dass während eines ersten Zeitfensters 12.1 Artikel 2 gemäß einem ersten Auftrag 13.1 aus den ersten Artikelschächten 9.1 in den ersten Bandbereich 8.1 am Zentralband 5 ausgeworfen werden und während eines zweiten Zeitfensters 12.2 Artikel 2 gemäß einem zweiten Auftrag 13.2 aus den zweiten Artikelschächten 9.2 in den zweiten Bandbereich 8.2 am Zentralband 5 ausgeworfen werden.

Der erste und zweite Artikelschacht 9.1, 9.2 weisen dabei das gleiche Artikelspektrum auf. Alle Artikel 2, welche von den Aufträgen 13.1, 13.2 verarbeitet werden können, finden sich demnach identisch in den ersten und zweiten Artikelschächten 9.1, 9.2. Dadurch kann die Steuerung 10 je nach vorliegender Auslastung der Bandbereiche 8.1, 8.2 und Artikelschächte 9.1, 9.2 die anstehenden Aufträge wahlweise als ersten oder zweiten Auftrag 13.1, 13.2 zum Auswurf von Artikeln 2 aus den ersten oder zweiten Artikelschächten 9.1, 9.2 zuweisen.

Am Behälterförderer 3 ist zumindest ein erstes Auftragsgebinde 4.1 und ein zweites Auftragsgebinde 4.2 vorgesehen. Die aus den ersten Artikelschächten 9.1 in den ersten Bandbereich 8.1 ausgeworfenen Artikel 2 des ersten Auftrags 13.1 werden in das erste Auftragsgebinde 4.1 kommissioniert. Gleichermaßen werden die aus den zweiten Artikelschächten 9.2 in den zweiten Bandbereich 8.2 ausgeworfenen Artikel 2 des zweiten Auftrags 13.2 in das zweite Auftragsgebinde 4.2 kommissioniert. Die Auftragsgebinde 4.1, 4.2 sind zudem in einem gemeinsamen Tray 16 auf dem Behälterförderer 3 vorgesehen, so dass diese gemeinsam transportiert werden und eine gemeinsame Stopp-Position 17 vor dem Zentralband 5 einnehmen.

Das erste und zweite Zeitfenster 12.1, 12.2 sind untereinander synchronisiert, so dass diese in ein übergeordnetes Zeitfenster 14 fallen, in welchem der erste und der zweite Auftrag 13.1, 13.2 bearbeitet werden. Dieses übergeordnete Zeitfenster 14 ist wiederum mit der Stopp-Position 17 eines Trays 16 am Behälterförderer 3 synchronisiert, so dass die Artikel 2 gemäß dem ersten und zweiten Auftrag 13.1, 13.2 während des Zeitfensters 14 parallel auf das Zentralband 5 ausgeworfen und in das jeweilige Auftragsgebinde 4.1, 4.2 kommissioniert werden.

In einer weiteren, in den Figuren nicht näher dargestellten Ausführungsvariante, können am Behälterförderer 3 auch ein drittes oder weiteres Auftragsgebinde vorgesehen sein. So kann das dritte Auftragsgebinde etwa zur manuellen Kommissionierung von Produkten während des Zeitfensters 14 dienen.

In der in Fig. 1 dargestellten Ausführungsvariante weist das Zentralbandsystem 1 zudem dem ersten Bandbereich 8.1 zugeordnete dritte Artikelschächte 9.3 und dem zweiten Bandbereich 8.2 zugeordnete vierte Artikelschächte 9.4 auf. Die dritten und vierten Artikelschächte 9.3, 9.4 weisen dabei ein voneinander unterschiedliches Artikelspektrum auf. Artikel 2 aus den dritten Artikelschächten 9.3 können dabei in den ersten Bandbereich 8.1 und Artikel 2 aus den vierten Artikelschächten 9.4 können in den zweiten Bandbereich 8.2 am Zentralband 5 ausgeworfen werden. Auf diese Weise können Aufträge die Artikel des Artikelspektrums der ersten und zweiten Artikelschächte 9.1 und 9.2 und Artikel des Artikelspektrums der dritten Artikelschächte 9.3 aufweisen auf dem ersten Bandbereich 8.1 in die ersten Auftragsgebinde 4.1 kommissioniert werden. Ebenso können Aufträge die Artikel des Artikelspektrums der ersten und zweiten Artikelschächte 9.1 und 9.2 und Artikel des Artikelspektrums der vierten Artikelschächte 9.4 aufweisen auf dem zweiten Bandbereich 8.2 in die zweiten Auftragsgebinde 4.2 kommissioniert werden. Die Steuerung 10 ist dazu ausgebildet die Aufträge entsprechend zuzuteilen.

In einer weiteren Ausführungsvariante, welche in den Figuren nicht näher dargestellt ist, können die ersten und zweiten Artikelschächte 9.1, 9.2 Artikel 2 einer Kategorie A und die dritten und vierten Artikelschächte 9.3, 9.4 Artikel 2 einer Kategorie B enthalten. Bei Artikeln 2 der Kategorie A kann es sich etwa um schnelldrehende Produkte handeln, während die Artikel einer Kategorie B mittel- oder langsamdrehende Produkte sein können.

Es kann erwähnt werden, dass die ersten Artikelschächte 9.1 an dem Zentralband 5 gegenüber der zweiten Artikelschächte 9.2 angeordnet können, aber nicht müssen. Ebenso können die dritten Artikelschächte 9.3 an dem Zentralband 5 gegenüber der vierten Artikelschächte 9.4 angeordnet sein, müssen aber nicht gegenüber angeordnet sein. Auch wäre möglich, dass nur dritte Artikelschächte 9.3 und keine vierten Artikelschächte 9.4 vorgesehen sind. Weiters wäre möglich, dass die ersten Artikelschächte 9.1 und die zweiten Artikelschächte 9.2 mit dem identischen Artikelspektrum nur jeweils einen Teil eines Zentralbandautomaten bilden und der verbleibende Teil der Artikelschächte dieser Zentralbandautomaten die dritten und vierten Artikelschächte 9.3 und 9.4 bilden.

Es kann erwähnt werden, dass auf einem Tray auch mehr als drei Auftragsgebinde oder auch nur die zwei Auftragsgebinde 4.1 und 4.2 vorgesehen sein können. Weiters wäre es möglich das Zentralband durch weitere Trenneinrichtungen in drei oder mehr Bandbereiche zu unterteilen und aus den ersten und zweiten Artikelschächten in all diese Bandbereiche zu kommissionieren.

## Patentansprüche

1. Zentralbandsystem (1) mit einem Behälterförderer (3) und mit auf dem Behälterförderer (3) transportierten Auftragsgebinden (4.1, 4.2), mit zumindest einem Zentralband (5), welches eine Förderrichtung (6) in Richtung des Behälterförderers (3) aufweist, wobei das Zentralband (5) in Querrichtung (7) zur Förderrichtung (6) zumindest einen ersten und zweiten Bandbereich (8.1, 8.2) aufweist, und mit jeweils dem ersten und zweiten Bandbereich (8.1, 8.2) zugeordneten ersten und zweiten Artikelschächten (9.1, 9.2), welche jeweils Artikel (2) gemäß einem Artikelspektrum aufweisen und zum Auswurf der Artikel (2) in den jeweils ersten bzw. zweiten Bandbereich (8.1, 8.2) ausgebildet sind, **dadurch gekennzeichnet, dass** das Zentralbandsystem (1) eine Steuerung (10) aufweist, um während eines ersten Zeitfensters (12.1) Artikel (2) gemäß einem ersten Auftrag (13.1) aus den ersten Artikelschächten (9.1) auszuwerfen und während eines zweiten Zeitfensters (12.2) Artikel (2) gemäß einem zweiten Auftrag (13.2) aus den zweiten Artikelschächten (9.2) auszuwerfen, wobei die ersten und zweiten Artikelschächte (9.1, 9.2) ein identisches Artikelspektrum aufweisen und das erste und zweite Zeitfenster (12.1, 12.2) miteinander synchronisiert sind, und dass am Behälterförderer (3) zumindest ein erstes und zweites Auftragsgebinde (4.1, 4.2) vorgesehen sind, um die parallel und unabhängig voneinander aufs Zentralband (5) ausgeworfenen Artikel (2) aus dem ersten und zweiten Bandbereich (8.1, 8.2) am Zentralband (5) parallel in das jeweils erste und zweite Auftragsgebinde (4.1, 4.2) am Behälterförderer (3) zu kommissionieren.

2. Zentralbandsystem nach Anspruch 1, **dadurch gekennzeichnet, dass** das Zentralband (5) eine Trenneinrichtung (15) zur Abtrennung des ersten und zweiten Bandbereichs (8.1, 8.2) aufweist.

3. Zentralbandsystem nach Anspruch 2, dass die Trenneinrichtung (15) als Trennvorhang (15) oder als Trennsteg ausgebildet ist.

4. Zentralbandsystem nach einem der Ansprüche 1 bis 3, **dadurch gekennzeichnet, dass** ein Tray (16) vorgesehen ist, um das erste und zweite Auftragsgebinde (4.1, 4.2) gemeinsam auf dem Behälterförderer (3) zu transportieren.

5. Zentralbandsystem nach Anspruch 4, **dadurch gekennzeichnet, dass** die Steuerung (10) zum Synchronisieren des ersten und zweiten Zeitfensters (12.1, 12.2) zum Auswurf der Artikel (2) aus den ersten und zweiten Artikelschächten (13.1, 13.2) mit einer Stopp-Position (17) des Trays (16) am Behälterförderer (3) ausgebildet ist.

6. Zentralbandsystem nach Anspruch 5, **dadurch gekennzeichnet, dass** das Zentralbandsystem (1) jeweils dem ersten und zweiten Bandbereich (8.1, 8.2) zugeordnete dritte und vierte Artikelschächte (9.3, 9.4) zum Auswurf von Artikeln (2) in den jeweils ersten und zweiten Bandbereich (8.1, 8.2) aufweist.

7. Zentralbandsystem nach Anspruch 6, **dadurch gekennzeichnet, dass** die ersten und zweiten Artikelschächte (9.1, 9.2) Artikel (2) einer Kategorie A und die dritten und vierten Artikelschächte (9.3, 9.4) Artikel (2) einer Kategorie B enthalten.

8. Verfahren zur Kommissionierung von Artikeln (2) über ein Zentralband (5) mit einem Behälterförderer (3), und auf dem Behälterförderer (3) transportierten Auftragsgebinden (4.1, 4.2), bei dem Artikel (2) aus ersten und zweiten Artikelschächten (9.1, 9.2) jeweils in einen ersten und zweiten Bandbereich (8.1, 8.2) auf dem Zentralband (5) ausgeworfen werden, **dadurch gekennzeichnet, dass** die ersten und zweiten Artikelschächte (9.1, 9.2) jeweils Artikel gemäß einem identischen Artikelspektrum aufweisen und, dass während eines ersten Zeitfensters (12.1) Artikel (2) gemäß einem ersten Auftrag (13.1) aus den ersten Artikelschächten (9.1) in den ersten Bandbereich (8.1) ausgeworfen werden und während eines zweiten Zeitfensters (12.2) Artikel (2) gemäß einem zweiten Auftrag (13.2) aus den zweiten Artikelschächten (9.2) in den zweiten Bandbereich (8.2) ausgeworfen werden, wobei das erste und zweite Zeitfenster (12.1, 12.2) miteinander synchronisiert sind, und wobei die parallel und unabhängig voneinander aufs Zentralband (5) ausgeworfenen Artikel (2) aus dem ersten und zweiten Bandbereich (8.1, 8.2) parallel in jeweils ein erstes und ein zweites Auftragsgebinde (4.1, 4.2) am Behälterförderer (3) kommissioniert werden.

9. Verfahren nach Anspruch 8, **dadurch gekennzeichnet, dass** die unterschiedlichen Auftragsgebinde (4.1, 4.2) gemeinsam in einem Tray (16) am Behälterförderer (3) transportiert werden.

10. Verfahren nach Anspruch 8 oder 9, **dadurch gekennzeichnet, dass** das erste und das zweite Zeitfenster (12.1, 12.2) zum Auswurf der Artikel (2) aus den ersten und zweiten Artikelschächten (9.1, 9.2) mit einer Stopp-Position (17) des Behälterförderers (3) synchronisiert werden.

## Claims

1. A central belt system (1) comprising a container conveyor (3) and comprising order packages (4.1, 4.2) transported on the container conveyor (3), comprising at least one central belt (5) which has a conveying direction (6) toward the container conveyor (3), with the central belt (5) having at least a first and a second belt area (8.1, 8.2) in the transverse direction (7) to the conveying direction (6), and comprising first and second article chutes (9.1, 9.2) associated with the respective first and second belt areas (8.1, 8.2) and each having articles (2) according to a range of articles and designed for ejecting the articles (2) into the respective first and second belt areas (8.1, 8.2), respectively, **characterized in that** the central belt system (1) has a control (10) in order to eject articles (2) from the first article chutes (9.1) during a first time window (12.1) according to a first order (13.1) and to eject articles (2) from the second article chutes (9.2) during a second time window (12.2) according to a second order (13.2), with the first and second article chutes (9.1, 9.2) having an identical range of articles and the first and second time windows (12.1, 12.2) being synchronized with one another, and that at least a first and a second order package (4.1, 4.2) are provided on the container conveyor (3) in order to order-pick the articles (2), which have been ejected onto the central belt (5) in parallel and independently of one another, from the first and second belt areas (8.1, 8.2) on the central belt (5) in parallel into the respective first and second order packages (4.1, 4.2) on the container conveyor (3).

2. The central belt system according to claim 1, **characterized in that** the central belt (5) has a separating device (15) for separating the first and second belt areas (8.1, 8.2).

3. The central belt system according to claim 2, **characterized in that** the separating device (15) is designed as a separating curtain (15) or a separating web.

4. The central belt system according to any one of claims 1 to 3, **characterized in that** a tray (16) is provided in order to transport the first and second order packages (4.1, 4.2) jointly on the container conveyor (3).

5. The central belt system according to claim 4, **characterized in that** the control (10) is designed for synchronizing the first and second time windows (12.1, 12.2) for ejecting the articles (2) from the first and second article chutes (13.1, 13.2) with a stop position (17) of the tray (16) on the container conveyor (3).

6. The central belt system according to claim 5, **characterized in that** the central belt system (1) has third and fourth article chutes (9.3, 9.4) associated with the respective first and second belt areas (8.1, 8.2) for ejecting articles (2) into the respective first and second belt areas (8.1, 8.2).

7. The central belt system according to claim 6, **characterized in that** the first and second article chutes (9.1, 9.2) contain articles (2) of a category A, and the third and fourth article chutes (9.3, 9.4) contain articles (2) of a category B.

8. A method of order-picking articles (2) via a central belt (5) with a container conveyor (3), and order packages (4.1, 4.2) transported on the container conveyor (3), wherein articles (2) are, in each case, ejected from first and second article chutes (9.1, 9.2) into a first and a second belt area (8.1, 8.2) on the central belt (5), **characterized in that** the first and second article chutes (9.1, 9.2) each have articles according to an identical range of articles and that articles (2) are ejected from the first article chutes (9.1) into the first belt area (8.1) during a first time window (12.1) according to a first order (13.1) and articles (2) are ejected from the second article chutes (9.2) into the second belt area (8.2) during a second time window (12.2) according to a second order (13.2), wherein the first and second time windows (12.1, 12.2) are synchronized with each other, and wherein the articles (2), which have been ejected onto the central belt (5) in parallel and independently of one another are order-picked from the first and second belt areas (8.1, 8.2) in parallel into a respective first and second order packages (4.1, 4.2) on the container conveyor (3).

9. The method according to claim 8, **characterized in that** the different order packages (4.1, 4.2) are transported jointly in a tray (16) on the container conveyor (3).

10. The method according to claim 8 or 9, **characterized in that** the first and second time windows (12.1, 12.2) for ejecting the articles (2) from the first and second article chutes (9.1, 9.2) are synchronized with a stop position (17) of the container conveyor (3).

## Revendications

1. Système de courroie centrale (1) avec un convoyeur de conteneurs (3) et avec des récipients de commande (4.1, 4.2) transportés sur le convoyeur de conteneurs (3), avec au moins une courroie centrale (5) qui possède une direction de convoyage (6) en direction du convoyeur de conteneurs (3), la courroie centrale (5) possédant dans une direction perpendiculaire (7) à la direction de convoyage (6) au moins une première et une deuxième zone de courroie (8.1, 8.2), avec des premier et deuxième compartiments pour articles (9.1, 9.2) associés respectivement à la première et à la deuxième zone de courroie (8.1, 8.2), lesquels comportent chacun des articles (2) correspondant à une gamme d'articles et sont conçus pour le déchargement des articles (2) respectivement dans la première ou la deuxième zone de courroie (8.1, 8.2), **caractérisé en ce que** ce système de courroie centrale (1) comporte une commande (10) pour décharger dans une première fenêtre temporelle (12.1) des articles (2) correspondant à une première commande (13.1) du premier compartiment pour articles (9.1) et décharger dans une deuxième fenêtre temporelle (12.2) des articles (2) correspondant à une deuxième commande (13.2) du deuxième compartiment pour articles (9.2), les premier et deuxième compartiments pour articles (9.1, 9.2) présentant une gamme d'articles identique et les première et deuxième fenêtres temporelles (12.1, 12.2) étant synchronisées entre elles, et qu'au moins un premier et un deuxième récipient de commande (4.1, 4.2) sont prévus sur le convoyeur de conteneurs (3) pour préparer les articles (2) déchargés parallèlement et indépendamment les uns des autres sur la courroie centrale (5) depuis les première et deuxième zones de courroie (8.1, 8.2) de la courroie centrale (5), parallèlement dans le premier et le deuxième récipient de commande (4.1, 4.2) sur le convoyeur de conteneurs (3).

2. Système de courroie centrale selon la revendication 1, **caractérisé en ce que** la courroie centrale (5) comporte un dispositif de séparation (15) pour la séparation des première et deuxième zones de courroie (8.1, 8.2).

3. Système de courroie centrale selon la revendication 2, **caractérisé en ce que** le dispositif de séparation (15) est configuré comme un rideau de séparation (15) ou une cloison de séparation.

4. Système de courroie centrale selon une des revendications 1 à 3, **caractérisé en ce qu'**il est prévu un bac (16) pour transporter ensemble le premier et le deuxième récipient de commande (4.1, 4.2) sur le convoyeur de conteneurs (3).

5. Système de courroie centrale selon la revendication 4, **caractérisé en ce que** la commande (10) pour la synchronisation des première et deuxième fenêtres temporelles (12.1, 12.2) pour le déchargement des articles (2) des premier et deuxième compartiments pour articles (13.1, 13.2) est configurée avec une position d'arrêt (17) du bac (16) sur le convoyeur de conteneurs (3).

6. Système de courroie centrale selon la revendication 5, **caractérisé en ce que** ce système de courroie centrale (1) comporte des troisième et quatrième compartiments pour articles (9.3, 9.4) associés respectivement à la première et à la deuxième zone de courroie (8.1, 8.2) pour décharger des articles respectivement dans les première et deuxième zones de courroie (8.1, 8.2).

7. Système de courroie centrale selon la revendication 6, **caractérisé en ce que** les premier et deuxième compartiments pour articles (9.1, 9.2) contiennent des articles (2) d'une catégorie A et les troisième et quatrième compartiments pour articles (9.3, 9.4) contiennent des articles (2) d'une catégorie B.

8. Procédé pour la préparation d'articles (2) par l'intermédiaire d'une courroie centrale (5) avec un convoyeur de conteneurs (3) et des récipients de commande (4.1, 4.2) transportés sur le convoyeur de conteneurs (3), selon lequel des articles (2) sont déchargés d'un premier et d'un deuxième compartiments pour articles (9.1, 9.2) respectivement dans une première et une deuxième zone de courroie (8.1, 8.2) sur la courroie centrale (5), **caractérisé en ce que** les premier et deuxième compartiments pour articles (9.1, 9.2) comportent chacun des articles (2) correspondant à une gamme d'articles identiques et que, dans une première fenêtre temporelle (12.1), des articles (2) correspondant à une première commande (13.1) sont déchargés du premier compartiment pour articles (9.1) dans la première zone de courroie (8.1) et, dans une deuxième fenêtre temporelle (12.2), des articles (2) correspondant à une deuxième commande (13.2) sont déchargés du deuxième compartiment pour articles (9.2) dans la deuxième zone de courroie (8.2), les première et deuxième fenêtres temporelles (12.1, 12.2) étant synchronisées entre elles et les articles (2) déchargés parallèlement et indépendamment les uns des autres sur la courroie centrale (5) depuis les première et deuxième zones de courroie (8.1, 8.2) étant préparés parallèlement dans le premier et le deuxième récipient de commande (4.1, 4.2) sur le convoyeur de conteneurs (3).

9. Procédé selon la revendication 8, **caractérisé en ce que** les différents récipients de commande (4.1, 4.2) sont transportés ensemble dans un bac (16) sur le convoyeur de conteneurs (3).

10. Procédé selon la revendication 8 ou 9, **caractérisé en ce que** les première et deuxième fenêtres temporelles (12.1, 12.2) pour le déchargement des articles (2) des premier et deuxième compartiments pour articles (9.1, 9.2) sont synchronisées avec une position d'arrêt (17) du convoyeur de conteneurs (3).
